Europäisches Patentamt

European Patent Office

Office européen des brevets

(11) Publication number: **0 189 298**
**A2**

(12) # EUROPEAN PATENT APPLICATION

(21) Application number: **86300358.8**

(22) Date of filing: **20.01.86**

(51) Int. Cl.⁴: **B 60 C 9/20**, B 60 C 9/18

(30) Priority: **23.01.85 GB 8501647**

(43) Date of publication of application: **30.07.86**
**Bulletin 86/31**

(84) Designated Contracting States: **DE FR GB IT**

(71) Applicant: **SP TYRES UK LIMITED, Fort Dunlop, Birmingham B24 9QT (GB)**

(72) Inventor: **Ingley, Peter, 10 Chandlers Drive Amington, Tamworth Staffs B77 4NY (GB)**
Inventor: **Nock, Nigel Gerard, 16 Larch House Shawsdale Road, Bromford Birmingham B36 8GD (GB)**
Inventor: **Watkins, Robert David, 18 Comsey Road, Great Barr Birmingham B43 7RG (GB)**

(74) Representative: **Stewart, Charles Geoffrey, SP TYRES UK LIMITED Tyre Technical Division, Fort Dunlop Birmingham B24 9QT (GB)**

(54) **Motor cycle tyres.**

(57) A tyre for a motor cycle having a curved cross section tread supported by a reinforced tread support region wherein the tread region (1) comprises a wear zone (10) of rubber tread compound containing no reinforcement fabric, a sub-tread layer (7) of rubber compound and between the wear zone (10) and sub-tread layer (7) an inter-tread layer (9) of high extensibility fabric. Suitable extensibilities are 8 to 16% and suitable materials include polyamide. The tyre tread wear zone (10) may be plain or patterned.

## MOTOR CYCLE TYRES

This invention relates to motor cycle tyres and, in particular, to tyres for high performance and racing motor cycles.

When considered in cross section, such tyres have sharply curved tread regions to allow for banking over of the motor cycle. The tread region is specially reinforced so that the necessary tread and carcass stability is provided for vehicle handling whilst being sufficiently flexible to provide sufficient localised tread flattening in the ground contact patch for road grip.

Previous attempts to reduce heat generation have used low grip compounds or thinner tyre tread thicknesses, but these were not useful solutions in practice.

It is an object of the present invention to reduce the heat generated in the tread compound in the ground contact patch itself without materially affecting the tread stiffness and grip so that vehicle handling may be maintained without loss of tyre/road grip.

According to the present invention, a tyre for a motor cycle comprises a carcass having a pair of spaced-apart reinforced annular bead regions, a central tread supporting region, the tread supporting region being reinforced and shaped to provide a substantially curved cross section reinforced tread supporting region, and a tread region radially outwards of the tread support region and mounted thereon, wherein the tread region comprises a wear zone formed by a thickness of rubber tread compound containing no fabric reinforcement which wears during use of the tyre, a sub-tread layer of rubber compound and between said wear zone and sub-tread layer, an inter-tread layer of high extensibility fabric reinforcement.

The inter-tread layer reinforcement preferably comprises cords of a high extensibility material, for example, polyamide having an extensibility of 8 - 16%.

This extensibility of the fabric reinforcement is essential to avoid the inter-tread reinforcement layer affecting the carcass stiffness and thus the vehicle handling properties.

It should be noted that no inter-tread reinforcement fabric must be positioned in the wear zone of the tyre tread so that the rubber compound, and tread pattern where used, is able to operate in the normal manner and thus provide good grip. This is particularly important for race tyre treads where sufficient tread heating is essential. When a tyre tread pattern is used providing a useful wear thickness the depth of the pattern, the inter-tread fabric may be positioned at the base of the tread pattern.

The inter-tread reinforcement fabric may comprise cross woven fabric, but is preferably a single ply of substantially weftless tyre cord fabric. Preferably the cords of the tyre cord fabric are laid at an angle between $0^{0}$ and $90^{0}$ to the circumferential direction so that the effect is to reduce movement at the base of the wear region of the tread, due to entry and leaving the ground contact patch and resist heat generation without affecting carcass stiffness.

More than one layer of ply of inter-tread reinforcement fabric may be used and the cord angles may be the same in each ply or different.

The tyre may be a crossply or radial ply tyre and in either case a tread reinforcement package or breaker may be used adjacent to the carcass reinforcement and spaced from the inter-tread reinforce-fabric by the sub-tread layer.

Further aspects of the present invention will be apparent from the following description, by way of example only, of two embodiments in conjunction with the attached extensibility drawings in which:-

Fig 1    is a construction of a 375/3700 18 inch motor cycle race
         tyre of the slick or patternless type.
and
Fig 2    is a cross section of a 130/80 x 18 inch motor cycle road
         tyre.

The tyre comprises a tread region 1 which has a convex ground
engaging surface to allow for banking over of the machine and a
toroidal carcass which together with the wheel rim (not shown)
forms the air chamber for the tyre.  The carcass comprises sidewalls
(2) and bead regions (3) reinforced by bead reinforcement hoops (4).
A carcass reinforcement (5) of two plies of rayon tyre fabric
extends around the tyre carcass and is anchored to each bead hoop
(4) by being wrapped around it.  The carcass reinforcements are
both laid at $88^{\circ}$ to the circumferential direction to provide a
radial carcass.

The tread region of the tyre is reinforced to give the required
structural rigidity properties for the tyre by a pair of tyre
fabric breaker plies (5 and 6) each of which comprises weftless
Kevlar (registered trade mark) cord tyre fabric laid with the cords
at $25^{\circ}$ to the circumferential direction with the cords of ply (6)
crossing the cords of ply (5).  The construction so far is quite
conventional and in a normal tyre a thick layer of tread rubber
would now be placed over the breakers.

The present construction, however, has a sub-tread layer (7) of
tread compound positioned over the breakers (5 and 6).  (This
layer is shown cross hatched for clarity.)  The sub-tread layer (7)
extends across the full width of the tread (1) to the tread
shoulders (8).  An inter-tread reinforcement ply (9) comprising
a single ply of polyamide (nylon) fabric is positioned over the
sub-tread layer (7) and extends from one shoulder to the other.
The fabric is a plane woven fabric of 100 cords per inch polyamide
with cotton weft spaced at 10 mm.  The polyamide cords are two filaments of 140 tex polyamide and the cord has an extensbility of 8.7%. The polyamide cords are laid at 45$^{o}$ to the circumferential direction.

It should be noted that both the sub-tread layer (7) and the tread wear zone (10) comprise tread compound and together they produce a 6 mm thick tread zone. The inter-tread ply (9) is high extensibility material and this does not materially effect the tread stability when the tread region is considered as a whole which determines its resultant effect on the tyre properties which give the tyre its handling properties. Nevertheless, the inter-tread ply (9) by its presence within the tread thickness has been found to substantially reduce heat generation throughout the total tread thickness of 6 mm without preventing surface tread heating which is essential to allow modern high grip tread compounds to reach their maximum grip.

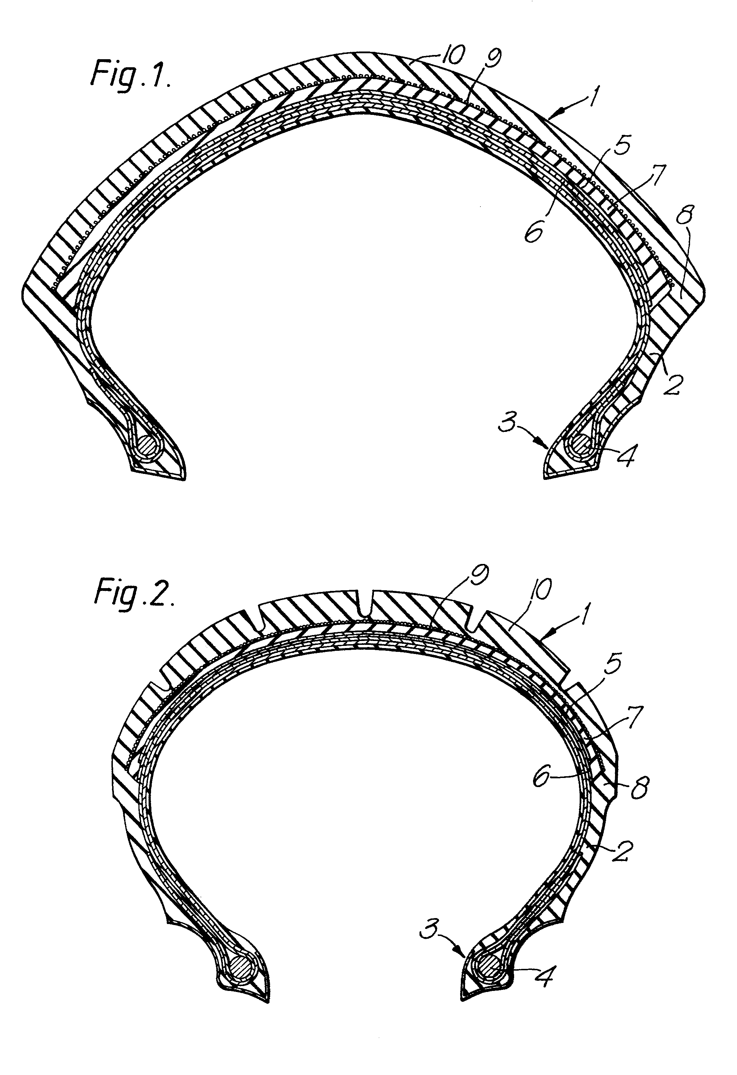

As shown in Fig 2, where the same reference numerals are used as with the first embodiment, this construction is also advantageous with a patterned tread and in that case the inter-tread fabric layer (9) is best positioned at the base of the tread pattern so that its effect is maintained throughout the life of the tyre tread.

Alternative inter-tread layer constructions may be used including two or more layers of fabrics and non-woven fabrics. Other materials may also be used as long as the resultant cords have an extensibility between 8 and 16% so that the inter-tread fabric does not materially affect the overall tread properties.

The tread construction with sub-tread, inter layer and wear zone may also be used on tyres other than radial ply tyres, for example, crossply tyres as long as they are of the type described with a substantially covered tread supporting region.

CLAIMS

1    A tyre for a motor cycle comprising a carcass having a pair of spaced-apart, reinforced annular bead regions (4), a central tread supporting region, the tread supporting region being reinforced and shaped to provide a substantially curved cross section reinforced tread supporting region and a tread region (1) radially outwards of the tread support region and mounted thereon characterised in that the tread region (1) comprises a wear zone (10) formed by a thickness of rubber tread compound containing no reinforcement fabric which wears during use of the tyre, a sub-tread layer (7) of rubber compound and between said wear zone (10) and sub-tread layer (7) an inter-tread layer (9) of high extensibility fabric reinforcement.

2    A tyre according to claim one characterised in that the inter-tread reinforcement fabric (9) comprises cords of a high extensibility material having an extensibility of 8% to 16%.

3    A tyre according to claim 2 characterised in that the cords of the inter-tread reinforcement fabric (9) comprise polyamide.

4    A tyre according to anyone of claims 1 to 3 characterised in that the tread wear zone (10) has a tread pattern formed therein having a depth substantially the full thickness of the wear zone (10) so that the inter-tread fabric (9) is at the base of the tread pattern.

5    A tyre according to anyone of claims 1 to 4 characterised in that the inter-tread layer (9) of fabric comprises a single thickness of fabric.

6    A tyre according to anyone of claims 1 to 5 characterised in that the inter-tread fabric (9) is a substantially weftless tyre cord fabric having its cords laid at between $0^{\circ}$ and $90^{\circ}$ to the circumferential centreline of the tyre tread.

7    A tyre according to anyone of claims 1 to 6 characterised in that the tyre has a radial ply carcass and a tread region reinforcing breaker assembly (6) is provided under the sub-tread layer.

Fig.1.

Fig.2.